**Europäisches Patentamt**

**European Patent Office**

**Office européen des brevets**

(19)

(11) Veröffentlichungsnummer: **0 231 490 B1**

(12) # EUROPÄISCHE PATENTSCHRIFT

(45) Veröffentlichungstag der Patentschrift: **29.05.91**

(51) Int. Cl.⁵: **G10L 5/06**

(21) Anmeldenummer: **86117349.0**

(22) Anmeldetag: **12.12.86**

(54) **Verfahren zur Spracherkennung in geräuschvoller Umgebung.**

(30) Priorität: **20.12.85 DE 3545447**

(43) Veröffentlichungstag der Anmeldung:
**12.08.87 Patentblatt 87/33**

(45) Bekanntmachung des Hinweises auf die
Patenterteilung:
**29.05.91 Patentblatt 91/22**

(84) Benannte Vertragsstaaten:
**DE ES FR GB IT SE**

(56) Entgegenhaltungen:
**GB-A- 2 137 791**

**WISSENSCHAFTLICHE BERICHTE
A.E.G.-TELEFUNKEN, Band 47, Nr. 3/4, 1974,
Seiten 84-90, Berlin, DE; H. MANGOLD:
"Automatische Worterkennung bei starken
Umgebungsgeräuschen"**

(73) Patentinhaber: **Bayerische Motoren Werke Aktiengesellschaft
Patentabteilung AJ-3 Postfach 40 02 40 Petuelring 130
W-8000 München 40(DE)**

(72) Erfinder: **Probst, Max Josef
Einsteinstrasse 111
W-8000 München 80(DE)**

(74) Vertreter: **Bullwein, Fritz
Bayerische Motoren Werke Aktiengesellschaft Postfach 40 02 40 Petuelring 130 AJ-33
W-8000 München 40(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 231 490 B1

**Beschreibung**

Die Erfindung bezieht sich auf ein Verfahren nach dem Oberbegriff des Patentanspruchs 1.

Gerade in geräuschvoller Umgebung bereitet das selbsttätige Erkennen menschlicher Sprache nicht unerhebliche Schwierigkeiten. Die Sprachinformation ist häufig von Geräuschen überlagert und derart gestört, daß sogar die Erkennung mit Hilfe des menschlichen Gehörs häufig mißlingt. Darüber hinaus ist gerade das exakte Erkennen von gesprochener menschlicher Information in besonderen Anwendungsfällen, beispielsweise beim Kraftfahrzeug das schnelle und exakte Erfassen derartiger Informationen, unbedingt erforderlich, um ggf. davon abhängige Steuervorgänge schnell und sicher durchführen zu können.

Es ist zwar theoretisch möglich, akustische Signale hinsichtlich verschiedener Parameter, wie beispielsweise Grundfrequenz, Energieinhalt und dgl. zu analysieren. Derartiges erfordert jedoch einen erheblichen apparativen Aufwand und ist in der Regel besonders zeitaufwendig. Diese Möglichkeit scheidet somit sowohl unter Kosten- als auch unter Zeitgründen für die meisten Anwendungsfälle aus.

Der Erfindung liegt die Aufgabe zugrunde, eine Verfahren der eingangs genannten Art zu schaffen, das mit geringem apparativem Aufwand ein exaktes Erkennen menschlicher Worte ermöglicht.

Die Erfindung löst diese Aufgabe durch die kennzeichnenden Merkmale des Patentanspruchs 1.

Unter Frequenzmuster ist ein aus einer Frequenzanalyse gewonnenes n-, vorzugsweise zweidimensionales Muster zu verstehen, wie z.B. aus der Veröffentlichung eines Vortragsmanuskripts eines Mitarbeiters der Gippon Electronic, Kawasaki City vom 09.11.1984 zum Thema "A speech recognition LSI chip Set" hervorgeht.

Wesentlich für die Erfindung ist zunächst die Analyse der akustischen Signale hinsichtlich ihrer Frequenz. Menschliche Sprache zeichnet sich im Unterschied zu Geräuschen dadurch aus, daß sie definierte Frequenzen bzw. Frequenzen in vorgegebenen Bereichen enthält. So ist menschlicher Sprache eine Grundfrequenz gemeinsam, die bedingt durch die anatomischen Verhältnisse des Sprechers zwischen 80 Hertz (bei Männern) und 400 Hertz (bei Kindern) liegt. Damit zusammenhängend sind Oberfrequenzen, die in definiertem Verhältnis zur Grundfrequenz stehen und die bei der Laut- oder Wortbildung erzeugt werden. Wird ein Paket akustische Signale z.B. hinsichtlich des angegebenen Bereiches für die Grundfequenz untersucht und ist eine derartige Frequenz nicht vorhanden, so läßt sich daraus mit Sicherheit ableiten, daß es sich nicht um menschliche Sprache handelt.

In diesem Falle wird das Paket akustischer Signale eindeutig dem Bereich des Geräusches zugeordnet und in Form eines Vergleichsmustes abgespeichert. Die Anzahl der zum Vergleich herangezogenen Vergleichsmuster für die Geräusche ist abhängig vom jeweiligen Einsatzort und auf eine maximale Zahl von zehn bis zwölf beschränkt. Für besondere Anwendungsfälle, beispielsweise in relativ ruhiger Umgebung, genügen in der Regel eine Anzahl von zwei bis drei Vergleichsgeräusche, um sämtliche akustische Signale eindeutig dem Bereich Geräusch oder menschliche Sprache zuzuordnen. Bei einer Umgebung, die wesentlich geräuschvoller ist, wie beispielsweise im Kraftfahrzeug, genügt eine Zahl von maximal zwölf Vergleichssignalen bzw. Vergleichsmustern, um sämtliche Geräusche abzudecken und mit deren Hilfe den Inhalt menschlicher Sprache in einem Paket akustischer Signale zu erkennen.

Hierzu werde die Pakete, die aufgrund der vorhandenen Frequenzen dem Bereich der menschlichen Sprache zuzuordnen sind, von ihrem Geräuschanteil befreit. Dies geschieht, indem von derartigen Paketen, die neben den akustischen Signalen aufgrund menschlicher Sprache auch Geräusche enthalten, der Geräuschanteil abgezogen wird. Hierzu werden von diesen Paketen die gespeicherten Geräuschmuster abgezogen. Zumindest eines der verbleibenden Differenzmuster enthält die gesuchte sprachliche Information, die ihrerseits mit einer vorgegebenen Information in Form eines Wortmusters verglichen wird. Das Wortmuster ist nach demselben Algorithmus wie das Frequenzmuster dieses Pakets gebildet. Durch Übereinstimmung wird damit die gesprochene Information identifiziert.

Die Vergleichsmuster können auf unterschiedliche Weise vorgehalten werden. So ist es beispielsweise möglich, eine Reihe von Standard-Vergleichsmustern vorzuhalten. Demgegenüber ist es wesentlich vorteilhafter, die für Umgebungsgeräusche typischen Muster anhand der tatsächlichen Geräusche abzuspeichern. Hierzu werden die Pakete, die eindeutig dem Bereich der Geräusche zuzuordnen sind, nacheinander abgespeichert und durch das jeweils zuletzt abgespeicherte Geräuschmuster das erste abgespeicherte Geräuschmuster ersetzt. Die Arbeitsweise dieser Speicheranordnung ist dann entsprechend der eines Schiebergisters. Es sind somit die letzten Geräuschmuster abgespeichert, die für die situativen Geräusche maßgeblich sind und die somit zumindest annähernd identisch sind mit den auf das zuletzt abgespeicherte Geräuschmuster folgenden Geräuschmustern.

Auch die Differenzmuster können auf unterschiedliche Weise erzeugt sein. So ist es beispielsweise möglich, ebenfalls mit Standards zu arbeiten. Demgegenüber ist es wesentlich den tatsächlichen Verhältnissen angepaßt, wenn die Wortmuster in einem vorangehenden Lernschritt festgehalten werden. Damit werden auch die unterschiedlichen Wortmuster, die von ein und demselben Sprecher zu unterschiedlichen Zeiten geliefert werden, ohne weiteres erkennbar.

Eine Verbesserung der Erfindung besteht in den Merkmalen, die im Patentanspruch 4 angegeben sind. Die Wahl der unterschiedlich, den Umgebungsgeräuschen angepaßten Algorithmen sei anhand eines Beispiels verdeutlicht. Es seien g(x) und f(x) diese unterschiedlichen Algorithmen, a der symbolische Ausdruck für ein Geräusch und w ein zu identifizierendes Wort, das von angenommen demselben Geräusch a überlagert ist. Das Differenzmuster ergibt sich dann zu

$$g(x)|_{x=a+w} -f(x)|_{x=a} = g(a+w) -f(a) =$$
$$g(a) - f(a) + w \cdot g'(a) + ....$$

Damit ergibt sich aber der geschilderte Zusammenhang. Abhängig vom Geräusch a ist bei geeigneter Wahl der Algorithmen g und f die Differenz g-(a) - f(a) = 0, der verbleibende Ausdruck enthält das Wort w und einen Therm, der den Resteinfluß des Algorithmus g, bezogen auf das Geräusch a beschreibt. Bei nicht zu stark variablem Geräusch innerhalb des Pakets ist die Ableitung g' nahezu eine Konstante.

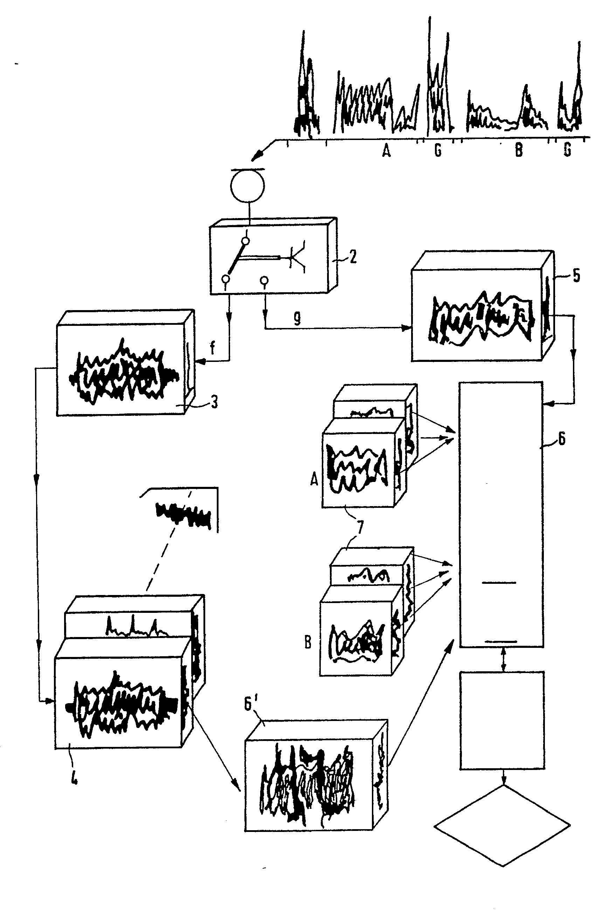

Die Erfindung ist anhand eines in der Zeichnung dargestellten Ausführungsbeispiels weiter erläutert.

Das Verfahren zur Spracherkennung in einem Kraftfahrzeug ist hinsichtlich der verwendeten Elemente in der Zeichnung dargestellt. Als erstes werden die vorhandenen akustischen Signale mit Hilfe eines Mikrofons 1 aufgenommen, in Pakete zeitlich gleicher Länge aufgeteilt und diese Pakete in einen Frequenzanalysator 2 eingegeben. Sind in diesen Paketen Frequenzen, wie sie typischerweise für menschliche Sprache charakteristisch sind, nicht vorhanden, so werden diese Pakete in eine Mustererzeugungseinrichtung 3 geleitet. Dort wird mit Hilfe des Algorithmus f bekannterweise ein zweidimensionales Flächenmuster erzeugt, das repräsentativ ist für den zeitlichen Frequenzverlauf der Pakete. Ein derartiges Paket ist schematisch im Mustererzeuger 3 gezeigt. Die dort erzeugten Frequenzmuster werden als Referenzmuster in einen Geräuschspeicher 4 eingegeben, der in der Lage ist, zwölf aufeinander folgende Frequenzmuster zu speichern. Er arbeitet nach Art eines Schieberegisters. Das bedeutet, daß das zuletzt auftretende Referenzmuster das zeitlich erste gespeicherte Referenzmuster ersetzt. Im Geräuschspeicher 4 sind somit die zwölf zuletzt aufgetreten Referenzmuster gespeichert.

Sind in den Paketen hingegen Frequenzen vorhanden, die für menschliche Sprache charakteristisch sind, so wird das auftretende Paket mit Hilfe des Analysators 2 in einen Mustererzeuger 5 eingeleitet, der insoweit entsprechend dem Mustererzeuger 3 arbeitet, als er ebenfalls ein zweidimensionales Frequenzmuster erzeugt. Er bildet dieses Frequenzmuster vorzugsweise nach einem anderen Algorithmus g. Die beiden verwendeten Algorithmen f und g sind abhängig von der Umgebung bzw. der Form der Referenzmuster so gewählt, daß die Diferenzmuster die wesentlichen Merkmale der jeweiligen Sprache vollständig und nur gering durch die Geräusche beeinflußt enthalten.

Das im Mustererzeuger 5 gebildete Frequenzmuster wird in eine Vergleichseinrichtung 6 eingegeben, die hiervon die im Geräuschspeicher 4 enthaltenen Referenzmuster subtrahiert. Die sich daraus ergebenden und in einen Teil 6' der Vergleichseinrichtung 6 gebildeten Differenzmuster werden mit vorgegebenen Wortmustern verglichen. Dabei ist die Zahl der Differenzmuster gleich der Zahl der im Geräuschspeicher 4 enthaltenen Referenzmuster.

Die zum Vergleich herangezogenen Wortmuster wiederum sind in einem Wortspeicher 7 enthalten. In diesem Wortspeicher werden die Wortmuster unter definierten Bedingungen und beispielsweise in einem vorangehenden Lernschritt bei fehlendem Geräusch eingegeben.

Jedem der Wortmuster ist eine definierte Folge von Steuerbefehlen oder dergleichen zugeordnet, die bei Übereinstimmung des im Vergleicher 6 enthaltenen Differenzmusters mit einem Wortmuster ausgelöst werden. Die dadurch hervorgerufene Steuerung von Ausrüstungs-oder Steuerbauteilen des Kraftfahrzeugs geschieht in bekannter Weise.

## Ansprüche

1.  Verfahren zur Spracherkennung in geräuschvoller Umgebung, insbesondere in einem Kraftfahrzeug, gekennzeichnet durch die Kombination folgender Merkmale,

    - daß die aktustischen Signale in Pakete konstanter Länge aufgeteilt, hinsichtlich ihrer Frequenzen analysiert und als Frequenzmuster wiedergegeben werden,
    - daß die Pakete nach für menschliche Sprache typischen Frequenzen untersucht werden,
    - daß eine begrenzte Anzahl von Frequenzmustern der Pakete, die derartige Frequenzen nicht enthalten, nacheinander als Vergleichsmuster abgespeichert werden,
    - daß von jedem Frequenzmuster der Pakete, die derartige Frequenzen enthalten, die vorhandenen Vergleichsmuster abgezogen werden und

- daß die danach verbleibenden Differenzmuster mit vorgegebenen Wortmustern verglichen werden.

2. Verfahren nach Anspruch 1, dadurch gekennzeichnet, daß die Vergleichsmuster fortlaufend entsprechend der Arbeitsweise eines Schieberegisters abgespeichert werden.

3. Verfahren nach Anspruch 1 oder 2, dadurch gekennzeichnet, daß die Wortmuster in einem vorangehenden Lernschritt festgehalten werden.

4. Verfahren nach einem der Ansprüche 1 bis 3, dadurch gekennzeichnet, daß die Frequenzmuster der Pakete, die für menschliche Sprache typische Frequenzen enthalten und die Vergleichsmuster nach unterschiedlichen Algorithmen gebildet sind, die abhängig von der jeweiligen Umgebung so gestaltet sind, daß die Differenzmuster die wesentlichen Merkmale der menschlichen Sprache enthalten.

## Claims

1. A method for speech recognition in a noisy environment, in particular in a motor vehicle, characterised by the combination of the following features:
   - that the acoustic signals are divided into sets of constant length, are analysed with regard to their frequencies and are passed on as frequency patterns,
   - that the sets are examined for frequencies typical of human speech,
   - that a limited number of frequency patterns of the sets, which do not contain such frequencies, are stored in succession as comparative patterns,
   - that from each frequency pattern of the sets which contain such frequencies, the comparative patterns which are present are withdrawn and
   - that the differential patterns remaining thereafter are compared with given word patterns.

2. A method according to Claim 1, characterised in that the comparative patterns are stored continuously in accordance with the mode of operation of a shift register.

3. A method according to Claim 1 or 2, characterised in that the word patterns are retained in a preceding learning script.

4. A method according to any of Claims 1 to 3, characterised in that the frequency patterns of the sets which contain frequencies typical of human speech and the comparative patterns are formed according to different algorithms which, depending on the respective environment, are constructed such that the differential patterns contain the essential features of human speech.

## Revendications

1. Procédé pour la reconnaissance de la parole dans un environnement bruyant, notamment dans un véhicule automobile, procédé caractérisé en ce qu'il comporte la combinaison des caractéristiques suivantes:
   - les signaux acoustiques sont répartis en paquets de longueur constante, qui sont analysés du point de vue de leur fréquence et qui sont reproduits sous la forme de modèles de fréquences,
   - les paquets sont analysés quant aux fréquences typiques de la parole humaine,
   - un nombre limité de modèles de fréquences des paquets qui ne contiennent pas de telles fréquences, sont mémorisés successivement en tant que modèles de comparaison,
   - les modèles de comparaison existants sont soustraits de chaque modèle de fréquences des paquets qui contiennent de telles fréquences,
   - les modèles différenciés subsistants ensuite sont comparés avec des modèles des mots prédéfinis.

2. Procédé selon la revendication 1, caractérisé en ce que les modèles de comparaison sont successivement mémorisés de façon correspondante au mode de fonctionnement d'un registre à décalage.

3. Procédé selon la revendication 1 ou la revendication 2, caractérisé en ce que les modèles de mots sont consignés dans une étape d'apprentissage précédente.

4. Procédé selon une des revendications 1 à 3, caractérisé en ce que les modèles de fréquences des paquets, qui contiennent des fréquences typiques de la parole humaine, et les modèles de comparaison, sont formés selon des algorithmes différents, qui sont prévus en fonction de l'environnement considéré, de façon que les modèles différenciés contiennent les caractéristiques essentielles de la parole humaine.